Europäisches Patentamt

European Patent Office

Office européen des brevets

(11) Veröffentlichungsnummer: **0 313 870**
**A1**

## (12) EUROPÄISCHE PATENTANMELDUNG

(21) Anmeldenummer: 88116305.9

(51) Int. Cl.4: **H02P 5/418**

(22) Anmeldetag: 01.10.88

(30) Priorität: 26.10.87 DE 3736143

(43) Veröffentlichungstag der Anmeldung:
03.05.89 Patentblatt 89/18

(84) Benannte Vertragsstaaten:
DE FR GB IT

(71) Anmelder: TELEFUNKEN electronic GmbH
Theresienstrasse 2
D-7100 Heilbronn(DE)

(72) Erfinder: Nutz, Karl-Diether, Dipl.-Ing.
Blumenstrasse 33
D-7101 Oedheim(DE)

(74) Vertreter: Maute, Hans-Jürgen, Dipl.-Ing.
TELEFUNKEN electronic GmbH
Theresienstrasse 2
D-7100 Heilbronn(DE)

(54) Schaltung zur Einstellung des Stromflusswinkels von Motoren elektrischer Werkzeuge.

(57) Bei einer Schaltung zur Einstellung des Stromflußwinkels von Werkzeugmotoren mit einer Phasenanschnittsteuerung ist ein Detektor für den Stromflußwinkel vorgesehen, der in demjenigen Zeitpunkt ein Signal liefert, in dem die Netzspannung diejenige Spannung unterschreitet, die dem gewünschten Stromflußwinkel entspricht. Außerdem ist ein Nullpunktdetektor vorgesehen, der im Bereich des Nullpunktes der Netzspannung ein Signal liefert.

FIG. 1

EP 0 313 870 A1

## Schaltung zur Einstellung des Stromflußwinkels von Motoren elektrischer Werkzeuge

Bei der Ansteuerung von Universalmotoren elektrischer Werkzeuge wie z. B. einem Staubsauger tritt das Problem auf, daß der Motor im Leerlauf mit einer einstellbaren Mindestdrehzahl präzise laufen soll. Dies erfordert, daß der für den Leerlauf erforderliche Stromflußwinkel von z. B. $30°$ bei $u_{Nenn}$ präzise eingehalten werden muß.

Der Erfindung liegt die Aufgabe zugrunde, eine Schaltung zur Einstellung des Stromflußwinkels von Motoren elektrischer Werkzeuge anzugeben, die es ermöglicht, daß eine Mindestdrehzahl des Werkzeugmotors präzise eingehalten wird, und zwar auch bei Abweichungen der Netzspannung vom Sollwert. Diese Aufgabe wird bei einer Schaltung der Einstellung des Stromflußwinkels von Motoren elektrischer Werkzeuge nach der Erfindung durch die kennzeichnenden Merkmale des Anspruchs 1 gelöst.

Das Wesen der Erfindung besteht darin, daß zwei Detektoren vorgesehen sind, von denen der eine den Nullpunkt der Netzspannung detektiert, und zwar für die Rampensynchronisierung der Phasenanschnittsteuerung, während der andere Detektor eine deutlich größere Erkennungsschwelle aufweist, die dem gewünschten bzw. einzustellenden Stromflußwinkel entspricht. Beide Detektoren steuern eine Freigabelogik an, welche ihrerseits eine Phasenanschnittsteuerung ansteuert.

Die Erfindung wird im folgenden an einem Ausführungsbeispiel erläutert.

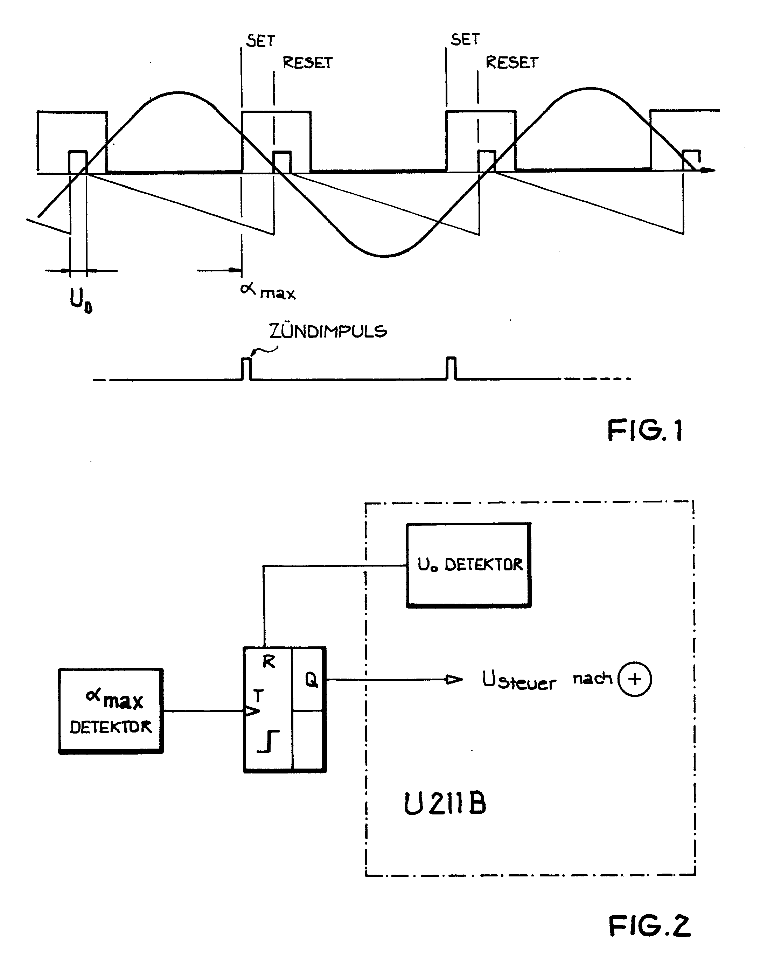

Die Figur 1 zeigt die Netzspannung in Gestalt einer Sinuskurve. Das Diagramm der Figur 1 zeigt außerdem kleine und große Impulse, die von zwei Detektoren erzeugt werden. Die kleineren Impulse, die von einem Nullpunktdetektor in den Bereichen des Nulldurchganges der Sinusspannung erzeugt werden, dienen zur präzisen Netzspannungs-Synchronisierung der für die Phasenanschnittsteuerung erforderlichen Rampenspannung, deren Verlauf der Figur 1 ebenfalls zu entnehmen ist. Die größeren Impulse der Figur 1 werden von einem zweiten Detektor erzeugt, der im Prinzip wie ein Nullpunktdetektor (Nulldurchgangsdetektor) aufgebaut ist, der jedoch auf eine deutlich größere Erkennungsschwelle eingestellt ist als der erste Detektor. Die größere Erkennungsschwelle entspricht dem gewünschten Mindeststromflußwinkel (z. B. $30°$) und damit auch dem maximalen Steuerwinkel $\alpha_{max}$. Deshalb wird der zweite Detektor als $\alpha_{max}$-Detektor bezeichnet. Die Figur 1 zeigt außer der Netzspannung, der Rampenspannung und den beiden Impulssignalen die Zündimpulse für den Triac, die erzwungen werden, wenn die dem gewünschten Stromflußwinkel entsprechende Netzspannung unterschritten wird.

Die Figur 2 zeigt das Prinzipschaltbild einer Schaltung nach der Erfindung. Als Hauptbestandteil der Freigabelogik ist ein Takt-Flipflop TFF1 vorgesehen, dessen Reset-Eingang von einem Nullpunkt-Detektor ($U_O$-Detektor) und dessen Takteingang T von einem $\alpha_{max}$-Detektor angesteuert wird. Der Ausgang Q des Takt-Flipflops TFF1 steuert eine Phasenanschnittsteuerung (z. B. U 211 B) an.

Die Schaltung der Figur 2 funktioniert wie folgt. Mit Hilfe des $U_O$-Detektors wird das Takt-Flipflop TFF1 zurückgesetzt und mit Hilfe der positiven Flanke des $\alpha_{max}$-Detektors wird das Takt-Flipflop in den Zustand 1 gesetzt. Der Ausgang des Takt-Flipflops TFF1 wird damit grundsätzlich mit jeder positiven Flanke des Signals des $\alpha_{max}$-Detektors - d. h. am Ende jeder Halbwelle im definierten Zeitpunkt $\alpha_{max}$ - auf ein Potential geschaltet, das die nachgeschaltete Phasenanschnittsteuerung (z. B. TFK/U 211 B) dazu zwingt, spätestens mit Erscheinen dieses Potentials einen Zündimpuls für den das eigentliche Leistungsglied darstellenden Triac zu erzeugen. Dies geschieht z. B. dadurch, daß mit Erscheinen der logischen "1" am Ausgang von TFF1 die Steuerspannung der nachgeschalteten Phasenanschnittsteuerung (z. B. U 211 B) auf den Maximalwert $\triangleq \alpha_{min}$ angehoben wird.

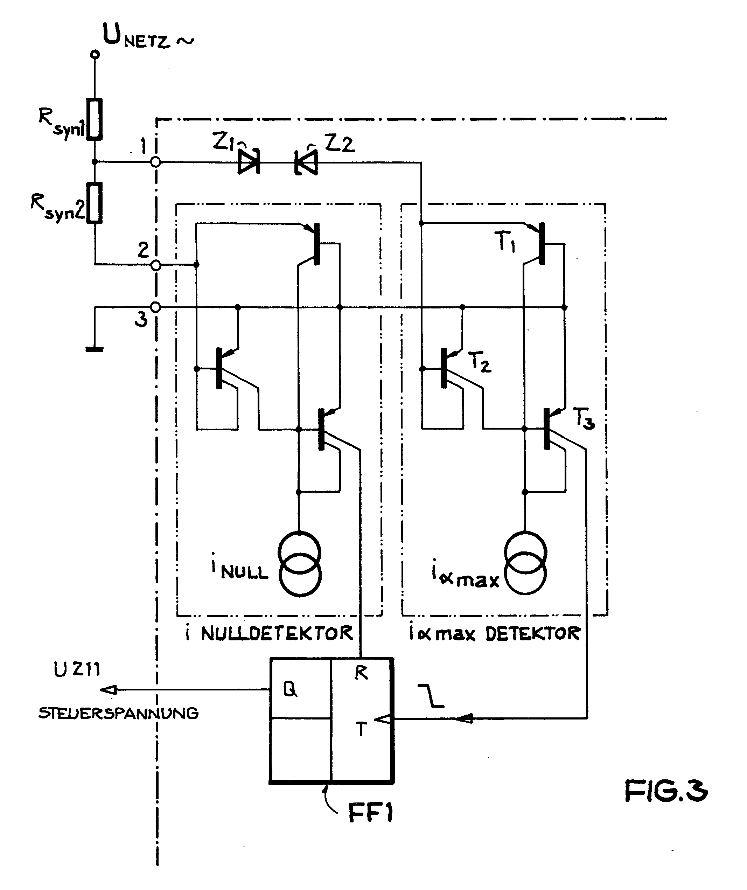

Die Schaltung der Figur 3 zeigt die Schaltung der Figur 2 im Detail. Wie der Figur 3 zu entnehmen ist, besteht der $\alpha_{max}$-Detektor aus dem Transistor $T_1$, den Stromspiegeln $T_2$ und $T_3$, den Z-Dioden $Z_1$ und $Z_2$ sowie der Konstantstromquelle $i_{\alpha max}$. Dem $\alpha_{max}$-Detektor wird ein Strom über den Synchronisierwiderstand $R_{syn1}$ zugeführt, wobei $R_{syn1}$ einen Spannungsteiler mit $R_{syn2}$ bildet. Der dem $\alpha_{max}$-Detektor über den Eingang 1 der Schaltung zugeführte Strom entspricht der Differenzspannung zwischen der Netzspannung und der Spannung am Punkt 1, reduziert um den Strom durch $R_{syn2}$. Der dem $\alpha_{max}$-Detektor zugeführte Strom kann somit erst fließen, wenn die Spannung am Eingang 1 als Funktion von $R_{syn1}/R_{syn2}$ größer wird als die Durchbruchspannung der Strecke $U_{Z1}$ + $U_{Z2}$ + $U_{F\alpha}$Detektor. Der zugeführte Strom wird im $\alpha_{max}$-Detektor mit einem konstanten Strom $i_{\alpha max}$ verglichen, der von der Konstantstromquelle $i_{\alpha max}$ geliefert wird. Sobald die Netzspannung einen Wert unterschreitet, der dem gewünschten Stromflußwinkel (z. B. $30°$) entspricht, reicht der am Punkt 1 der Schaltung angebotene Strom, der gleich dem Strom über $R_{syn1}$ reduziert um den Strom über $R_{syn2}$ ist, nicht mehr aus, um den von der Konstantstromquelle $i_{\alpha max}$ gelieferten Strom daran zu hindern, den Stromspiegel $T_3$ zu aktivie-

ren und auf diese Weise ein Taktsignal am Takt-Flop TFF1 auszulösen. Erst mit Hilfe des gemäß der Figur 1 am Ende der Halbwelle der Netzspannung erscheinenden Nullpunktimpulses $U_0$ wird das Takt-Flipflop TFF1 trotz des immer noch auf 1 stehenden Taktsignals zurückgesetzt mit der Folge, daß am Q-Ausgang des Takt-Flipflops TFF1 statt einer 1 eine 0 erscheint.

Für den Fall, daß vom Bediener des Werkzeugs bereits vor dem Unterschreiten der dem gewünschten Stromflußwinkel entsprechenden Netzspannung ein Zündimpuls für das Leistungselement (Triac) ausgelöst wurde, hat die erfindungsgemäße Schaltung keinen Einfluß mehr, weil schon ein Zündimpuls durch den Bediener zuvor ausgelöst war. Ohne einen Einfluß des Bedieners erscheint ein Zündimpuls gemäß der Figur 1 immer dann, wenn die dem gewünschten Stromflußwinkel entsprechende Netzspannung unterschritten wird.

Mit Hilfe der Schaltung nach der Erfindung kann natürlich ein beliebiger Stromflußwinkel eingestellt werden. Eine bevorzugte Ausführungsform der Erfindung besteht jedoch darin, daß ein spätest nötiger Zündzeitpunkt eingestellt wird, der gewährleistet, daß die dem Werkzeugmotor zugeführte elektrische Mindestleistung unabhängig von der Netzspannung konstant bleibt und dadurch weitgehend konstante Mindestdrehzahlen des Werkzeugmotors voreinstellbar macht. Benötigt wird bei der bevorzugten Ausführungsform ein möglichst später Wert bzw. Zündzeitpunkt, der jedoch noch gewährleistet, daß der Werkzeugmotor gerade noch so viel Energie bekommt, daß er läuft, und daß er beispielsweise bei Anwendung in einem Staubsauger gerade so viel elektrische Energie erhält, daß die Zuführung der Mindestsaugleistung gleich Saugleistung:Gardine gewährleistet ist.

Der richtige Stromflußwinkel, der die genannten Bedingungen erfüllt, kann für jedes elektrische Werkzeug in einfacher Weise ermittelt werden. Der Widerstand $R_{syn2}$ ist so einzustellen, daß er bei Unterschreiten der dem gewünschten Stromflußwinkel entsprechenden Spannung gerade so viel Strom von $I_{Rsyn}$ subtrahiert, daß der im Ausführungsbeispiel der Figur 3 dargestellte Stromspiegel $T_3$ über die interne Quelle $I_{\alpha max}$ aktiviert wird und dadurch ein Taktsignal für das Takt-Flipflop TFF1 ausgelöst wird, welches erst wieder durch das dem Reseteingang des Takt-Flipflops zugeführte Nullpunktsignal ($U_0$) zurückgesetzt wird.

Der links vom $\alpha_{max}$-Detektor in der Figur 3 dargestellte Nullpunktdetektor, der im Bereich des Nullpunktes der Netzspannung gemäß der Figur 1 ein Nullpunktsignal (Impuls) liefert, ist beispielsweise in der deutschen Patentschrift P 2553764 (Nulldurchgangsdetektor) beschrieben.

## Ansprüche

1) Schaltung zur Einstellung des Stromflußwinkels von Werkzeugmotoren mit einer Phasenanschnittsteuerung, dadurch gekennzeichnet, daß ein Detektor für den Stromflußwinkel vorgesehen ist, der in demjenigen Zeitpunkt ein Signal liefert, in dem die Netzspannung diejenige Spannung unterschreitet, die dem gewünschten Stromflußwinkel entspricht, und daß ein Nullpunktdetector vorgesehen ist, der im Bereich des Nullpunktes der Netzspannung ein Signal liefert.

2) Schaltung nach Anspruch 1, dadurch gekennzeichnet, daß eine Freigabelogik vorgesehen ist, die die Phasenanschnittsteuerung ansteuert und bei Unterschreiten der dem gewünschten Stromflußwinkel entsprechenden Spannung einen Zündimpuls für einen Triac erzeugt.

3) Schaltung nach Anspruch 1 oder 2, dadurch gekennzeichnet, daß als Teil der Freigabelogik ein Takt-Flipflop vorgesehen ist, welches die Phasenanschnittsteuerung ansteuert, daß der Detektor für den Stromflußwinkel das Set-Signal für das Takt-Flipflop liefert und daß der Nullpunktdetektor das Reset-Signal für das Takt-Flipflop liefert.

4) Schaltung nach einem der Ansprüche 1 bis 3, dadurch gekennzeichnet, daß der Detektor für den Stromflußwinkel einen Transistor, eine erste Stromspiegelschaltung und eine zweite Stromspiegelschaltung, zwei Z-Dioden sowie eine Konstantstromquelle aufweist.

5) Schaltung nach einem der Ansprüche 1 bis 4, dadurch gekennzeichnet, daß der Strom für den Stromflußwinkel-Detektor vom Netz über einen Spannungsteiler dem Stromflußwinkel-Detektor zugeführt wird.

6) Schaltung nach einem der Ansprüche 1 bis 5, dadurch gekennzeichnet, daß der dem Stromflußwinkel-Detektor zugeführte Strom mit dem Strom der Konstantstromquelle verglichen wird.

7) Schaltung nach einem der Ansprüche 1 bis 6, dadurch gekennzeichnet, daß der Strom der Konstantstromquelle des Stromflußwinkel-Detektors der zweiten Stromspiegelschaltung des Stromflußwinkel-Detektors zugeführt wird und daß die zweite Stromspiegelschaltung des Stromflußwinkel-Detektors das Taktsignal für das nachgeschaltete Takt-Flipflop liefert.

8) Schaltung nach einem der Ansprüche 1 bis 7, dadurch gekennzeichnet, daß der Strom der Konstantstromquelle des Stromflußwinkel-Detektors und der Eingangsstrom des Stromflußwinkel-Detektors derart aufeinander abgestimmt sind, daß der zweite Stromspiegel bei Unterschreiten der dem gewünschten Stromflußwinkel entsprechenden Spannung ein Taktsignal für das Takt-Flipflop liefert.

HN83-03

SET

SET

RESET

RESET

$U_0$

$\alpha_{max}$

ZÜNDIMPULS

**FIG.1**

$U_0$ DETEKTOR

R

T

$\alpha_{max}$
DETEKTOR

Q

$U_{steuer}$ nach $\oplus$

U 211 B

**FIG.2**

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 440 594 (TELEFUNKEN ELECTRONIC) * ganzes Dokument * --- | 1 - 3, 5 | H 02 P 5/418 |
| A | DE-A-2 553 764 (LICENTIA) * Figur 2 * --- | 1 | |
| A | DE-A-2 720 314 (VEB MAGDEBURGER ARMATURENWERKE K. MARX) * Seite 6, Zeile 34 - Seite 7, Zeile 5; Figur 1 * --- | 1 | |
| A | EP-A-0 180 860 (C. & E. FEIN) * Anspruch 5 * --- | 1 | |
| A | EP-A-0 011 503 (INDESIT INDUSTRIA ELETTRODOMESTICI ITALIANA S.p.A.) * Seite 3, Zeilen 24 - 28 * ----- | 1 | |

| RECHERCHIERTE SACHGEBIETE (Int. Cl.4) |
|---|
| H 02 P 5/00 H 02 M 1/00 |

Der vorliegende Recherchenbericht wurde für alle Patentansprüche erstellt

| Recherchenort | Abschlußdatum der Recherche | Prüfer |
|---|---|---|
| BERLIN | 18-01-1989 | LEOUFFRE M. |